(19) Europäisches Patentamt
European Patent Office
Office européen des brevets

(11) **EP 4 535 162 A1**

(12) **EUROPEAN PATENT APPLICATION**

(43) Date of publication:
**09.04.2025 Bulletin 2025/15**

(21) Application number: **24194801.7**

(22) Date of filing: **15.08.2024**

(51) International Patent Classification (IPC):
*G06F 7/544* *(2006.01)*

(52) Cooperative Patent Classification (CPC):
**G06F 7/5443**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **06.10.2023 KR 20230133410**

(71) Applicants:
• **Samsung Electronics Co., Ltd**
**Suwon-si, Gyeonggi-do 16677 (KR)**
• **Naver Corporation**
**Seongnam-si, Gyeonggi-do 13561 (KR)**

(72) Inventors:
• **JANG, Jae Hun**
**Suwon-si (KR)**
• **SON, Hong Rak**
**Suwon-si (KR)**

• **SHIN, Dong-Min**
**Suwon-si (KR)**
• **YOON, JongYoon**
**Suwon-si (KR)**
• **LIM, Jihoon**
**Suwon-si (KR)**
• **JEON, Younho**
**Suwon-si (KR)**
• **LEE, Dongsoo**
**Seongnam-si (KR)**
• **KWON, Se Jung**
**Seongnam-si (KR)**
• **KIM, Byeoung Wook**
**Seongnam-si (KR)**
• **PARK, Baeseong**
**Seongnam-si (KR)**

(74) Representative: **Marks & Clerk LLP**
**15 Fetter Lane**
**London EC4A 1BW (GB)**

(54) **COMPUTING DEVICE AND METHOD**

(57)    At least one embodiment provides a computing device including: a controller that receives first input data of a first data type and second input data of a second data type different from the first data type, and outputs a first signal representing the first data type, a second signal representing the second data type, and a clock signal based on the number of bits of the first input data and the second input data, and a computing circuit that performs a multiplication computation the first input data and the second input data based on the first signal, the second signal, and the clock signal and generates output data.

FIG. 6

## EP 4 535 162 A1

**Description**

BACKGROUND OF THE INVENTION

The present disclosure relates to a computing device and method.

Deep learning, a field of artificial intelligence (AI), recognizes patterns in complex data and enables sophisticated predictions. Generally, deep learning includes a training stage in which a neural network model is trained using training data, and an inference stage in which new data is input into the trained neural network model to obtain an output. While performance of the deep learning may be improved by enabling more sophisticated predictions as the neural network is constructed deeper, such improvement generally requires more power and slows down the model due to an enormous amount of computation.

Meanwhile, the neural network may include many layers for elaborate predictions, which may further increase computing complexity. Therefore, in order to reduce the computing complexity, algorithm lightweight techniques such as mapping floating point data to integers are being used.

SUMMARY OF THE INVENTION

At least one embodiment provides a computing device and method configured to perform multiplication and accumulation computation on input data having different data types.

At least one embodiment provides a computing device and method configured to perform multiplication and accumulation computation on input data with different precision.

At least one embodiment provides a computing device including: processing circuitry configured to receive first input data of a first data type and second input data of a second data type different from the first data type, output a first signal representing the first data type, a second signal representing the second data type, and a clock signal based on the number of bits of the first input data and the second input data, and perform a multiplication computation based on the first signal, the second signal, and the clock signal and generate output data such that a result of the multiplication computation is based on the first input data and the second input data.

Another embodiment provides a computing device configured to perform a multiplication computation on first data of a number of first bits and second data of a number of second bits that is different from the number of first bits, including: a first multiplexer including a first selection node and a plurality of input nodes, the first selection node configured to receive an output signal of a counter, the counter configured to count the number of cycles of a clock signal based on the number of first bits, and the plurality of input nodes configured to receive respective bit values of the first data, a second multiplexer including a second selection node, a first input node, and a second input node, the second selection node configured to receive output data of the first multiplexer, the first input node configured to receive a first value, and the second input node configured to receive one of the second data or data obtained by shifting the second data by one (1) bit from a shifter, and a first adder configured to add output data of the second multiplexer based on the clock signal.

Another embodiment provides a neural processing system including: a non-transitory memory, and processing circuitry configured to receive an input matrix and a weight matrix corresponding to input data from the memory, performs a matrix dot-product computation on the input matrix and the weight matrix, and outputs a result of performing the matrix dot-product computation as an output matrix, wherein the input matrix includes elements of a first data type and the weight matrix includes elements of a second data type different from the first data type, and the processing circuitry includes a computing device configured to output one of exponent data of elements of the input matrix or exponent data of elements of the weight matrix as exponent data of elements of the output matrix based on the first data type and the second data type.

At least some of the above and other features of the invention are set out in the claims.

BRIEF DESCRIPTION OF THE DRAWINGS

FIG. 1 illustrates a block diagram of a neural processing system according to at least one embodiment.

FIG. 2 is a drawing for explaining a neural network computation according to at least one embodiment.

FIGS. 3(A) and 3(B) are drawings for explaining an input data format.

FIG. 4 illustrates a computing circuit according to a comparative example.

FIG. 5 is a flowchart for explaining an operation method of a neural processing unit according to at least one embodiment.

FIG. 6 illustrates a schematic block diagram of a computing device according to at least one embodiment.

FIG. 7 illustrates a schematic block diagram of a computing circuit according to at least one embodiment.

FIG. 8 illustrates an exponent computing portion according to at least one embodiment.

FIG. 9 illustrates a mantissa computing portion according to at least one embodiment.

FIG. 10 is a drawing for explaining a computing method of the mantissa computing portion according to FIG. 9.

FIG. 11 illustrates a timing diagram of computation performed in a mantissa computing portion according to at least one embodiment.

FIG. 12 illustrates a timing diagram of computation performed in a mantissa computing portion according to another embodiment.

Figure 13 is an example drawing for explaining multi-head attention according to at least one embodiment.

FIG. 14 is an example drawing for explaining scaled dot-product attention of FIG. 13.

## DETAILED DESCRIPTION OF THE EMBODIMENTS

The present disclosure will be described more fully hereinafter with reference to the accompanying drawings, in which embodiments of the disclosure are shown. As those skilled in the art would realize, the described embodiments may be modified in various different ways, all without departing from the scope of the present disclosure. The functional elements and blocks shown in the drawings may be implemented in processing circuitry such as, software, hardware, or a combination thereof. For example, the processing circuitry more specifically may include, but is not limited to, a central processing unit (CPU), an arithmetic logic unit (ALU), a digital signal processor, a microcomputer, a field programmable gate array (FPGA), a System-on-Chip (SoC), a programmable logic unit, a microprocessor, application-specific integrated circuit (ASIC), etc. For example, the software may be machine code, firmware, embedded code, application software, and/or the like. For example, the hardware may include an electrical circuit, an electronic circuit, a processor, a computer, an integrated circuit, integrated circuit cores, passive components, a combination thereof, and/or the like.

Accordingly, the drawings and description are to be regarded as illustrative in nature and not restrictive. Like reference numerals designate like elements throughout the specification. In the flowcharts described with reference to the drawings in this specification, the operation order may be changed, various operations may be merged, certain operations may be divided, and certain operations may not be performed.

In addition, a singular form may be intended to include a plural form as well, unless an explicit expression such as "one" or "single" is used. Terms including ordinal numbers such as first, second, and/or the like will be used only to describe various constituent elements, and are not to be interpreted as limiting these constituent elements. These terms may be used for a purpose of distinguishing one constituent element from other constituent elements.

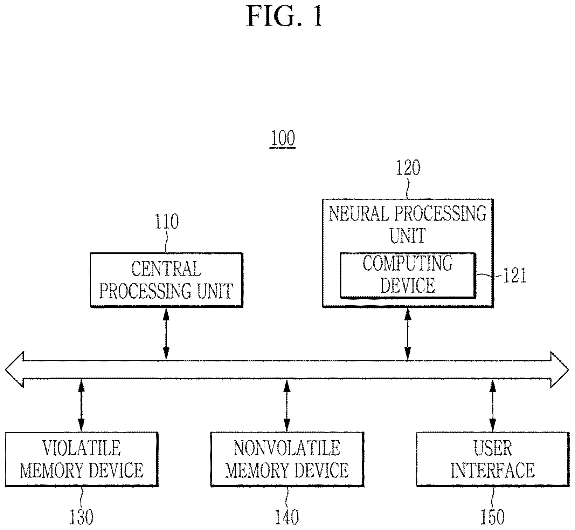

FIG. 1 illustrates a block diagram of a neural processing system according to at least one embodiment. A neural processing system 100 may be configured to train (or learn) a neural network and/or to infer information included in input data by analyzing the input data using the neural network. For example, the neural processing system 100 may, using the trained neural network, determine a situation based on the inferred information and/or control components of an electronic device on which the neural processing system 100 is mounted based on the determination. For example, the neural processing system 100 may be applied to devices that performs voice recognition, image recognition, and image classification using neural networks, smart phones, tablet devices, smart TVs, augmented reality (AR) devices, internet of things (IoT) devices, autonomous vehicles, robotics, medical devices, drones, advanced drivers assistance systems (ADAS), image display devices, measurement devices, and/or the like. In addition, the neural processing system 100 may be mounted on one of various types of electronic devices.

In at least one embodiment, the neural processing system 100 may include a central processing unit (CPU) 110, a neural processing unit (NPU) 120, a volatile memory device 130, a nonvolatile memory device 140, and a user interface 150. In at least one embodiment, some or all of the components (for example, the central processing unit 110, the neural processing unit 120, the volatile memory device 130, and the volatile memory device 140) of the neural processing system 100 may be formed on one semiconductor chip. For example, the neural processing system 100 may be implemented as a system-on-chip (SoC). The central processing unit 110, the neural processing unit 120, the volatile memory device 130, the nonvolatile memory device 140, and the user interface 150 may be connected to each other through a bus (BUS).

The central processing unit 110 is configured to control overall operations of the neural processing system 100. The central processing unit 110 may include one processor core (Single Core) or a plurality of processor cores (Multi-Core). The central processing unit 110 may process or execute programs and/or data stored in storage areas such as the volatile memory device 130 and the nonvolatile memory device 140. The central processing unit 110 may also be referred to as a central processor.

The central processing unit 110 may execute an application program and control the neural processing unit 120 to perform neural network-based tasks required according to the execution of the application program. The neural network may include at least one of various types of neural network models such as a convolution neural network (CNN), a region with convolution neural network (R-CNN), a region proposal network (RPN), a recurrent neural network (RNN), a stacking-based deep neural network (S-DNN), a state-space dynamic neural network (S-SDNN), a deconvolution network, a deep belief network (DBN), a restricted boltzmann machine (RBM), a fully convolutional network, a long short-term memory network (LSTM), a classification network, a transformer, and/or the like.

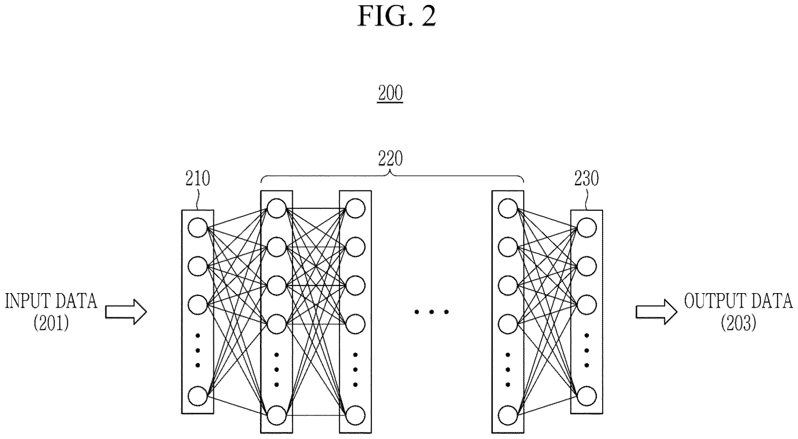

The neural network model may include a plurality of layers. Each of the plurality of layers may be configured to receive input data of the layer and generate output data of the layer. In these cases, except for the final layer (also referred to as an output layer) the generated output data of the layers may be used as input data of another layer. Each of the plurality of layers may transform input data into output data through neural network computation. For example, each of the plurality of layers may generate an output matrix corresponding to the output data of the layer by performing dot-product a weight matrix to the input matrix corresponding to the input data of the layer. However, the scope of the present disclosure is not limited thereto, and each of the plurality of layers may generate output data by converting the input matrix corresponding to the input data of the layer. For example, each of the plurality of layers may also be implemented to generate the output data of the layer by sequentially multiplying the input matrix corresponding to the input data of the layer by a plurality of weight matrices or to convert the input matrix based on a transformation parameter to generate the output data of the layer. A more detailed description of the neural network and the layer will be described with reference to FIG. 2.

The neural processing unit 120 may be configured to access data (e.g., stored in the volatile memory device 130) to execute neural network computation. For example, the neural processing unit 120 may read parameters stored in the volatile memory device 130 to perform computation on layer input data, and/or temporarily store intermediate data generated during computation in the volatile memory device 130. The neural processing unit 120 may also be referred to as a neural processor.

The neural processing unit 120 may access the nonvolatile memory device 140 to execute neural network computation. For example, the neural processing unit 120 may perform neural network computation by reading computational parameters (for example, weight values, and bias values) and input data (for example, input feature map) for neural networks stored in the nonvolatile memory device 140.

In at least one embodiment, the neural processing unit 120 may include a computing device 121 for performing a neural network computation. For example, the computing device 121 may perform a dot-product computation on the input matrix and weight matrix of each layer. The computing device 121 may include, for example, a multiplication and accumulation (MAC) operator for performing the dot-product computation on the input matrix and weight matrix of each layer. The computing device 121 may perform multiplication and accumulation computation on input data. The neural processing unit 120 may be a data-driven parallel computing device such that neural processing unit 120 may be configured to perform, at least, a plurality of the dot-product computations in parallel.

Meanwhile, the neural network may be implemented with a complex architecture, and the computing device 121 of the neural processing unit 120 that performs neural network computations performs hundreds of millions to tens of billions of computations. Therefore, lightweight technologies such as mapping floating point data into integer data are being used to lighten neural network algorithms. In at least one embodiment, the computing device 121 may receive a plurality of data having different data types as input data. For example, the computing device 121 may receive floating point data and integer data as input data, but is not limited thereto.

In at least one embodiment, the computing device 121 may receive a plurality of data with different precision (e.g., different bits), as input data. For example, the computing device 121 may receive bits of data within a predetermined number of bits that the computing device 121 may compute as input data.

In at least one embodiment, volatile memory device 130 may be used as a buffer memory, an operation memory, and/or a cache memory of the central processing unit 110. The volatile memory device 130 may include, for example, a dynamic RAM (DRAM), a static RAM (SRAM), a synchronous DRAM (SDRAM), a phase-change RAM (PRAM), a magnetic RAM (MRAM), a resistive RAM (RRAM), a ferroelectric RAM (FeRAM), and/or the like. However, the scope of present disclosure is not limited thereto.

The nonvolatile memory device 140 may store data for the operation of the neural processing system 100. For example, the nonvolatile memory device 140 may store an operating system (OS) of the neural processing system 100, computational parameters for the neural network (for example, weight values, bias values, and/or the like), parameters for quantization of the neural network (for example, scale factors, bias values, and/or the like), input data (for example, input feature map), and output data (for example, output feature map). The computational parameters, the quantization parameters, the input data, and the output data may be floating point data and/or integer data. The nonvolatile memory device 140 includes a read only memory (ROM), a programmable ROM (PROM), an electrically programmable ROM (EPROM), an electrically erasable and programmable ROM (EEPROM), a flash memory, a phase-change RAM (PRAM), a magnetic RAM (MRAM), a resistive RAM (RRAM), a ferroelectric RAM (FRAM), and/or the like. However, the scope of present disclosure is not limited thereto.

In at least some embodiments, the volatile and nonvolatile memory 130 and 140 may also be referred to as non-transitory memory and/or non-transitory storage medium. The term "non-transitory," as used herein, is a description of the medium itself (e.g., as tangible, and not a signal) as opposed to a limitation on data storage persistency (e.g., RAM vs. ROM).

The central processing unit 110 may communicate with a user through the user interface 150. The central processing unit 110 may provide input data provided by the user to the volatile memory device 130 or the neural processing unit 120 through the user interface 150. The user interface 150 may include, for example, a direct user interface such as a touch screen, a touch pad, a keypad, microphone, etc., and/or an indirect user interface, such as a wireless interface including, e.g., an antenna and/or a wireless transceiver and/or may be use a communication interface protocol of a third generation communication system, such as code division multiple access (CDMA), global system for mobile communications (GSM), North American digital cellular (NADC), extended-time division multiple access (E-TDMA), and/or wide band code division multiple access (WCDMA), and/or the like to communicate (directly and/or indirectly) with a device with a direct user interface. The central processing unit 110 may return output data generated by the artificial intelligence model based on input data to the user through the user interface 150.

FIG. 2 is a drawing for explaining a neural network computation according to at least one embodiment.

Referring to FIG. 2, a neural network 200 may include a plurality of layers. For example, the neural network 200 may include an input layer 210, one or more hidden layers 220, and an output layer 230. The input layer 210 may correspond to a vector and/or matrix representing input data 201 of the neural network 200. For example, a vector representing input data may have elements corresponding to the number of nodes included in the input layer 210. For example, elements included in a matrix representing input data may correspond to each of the nodes included in the input layer 210. Signals generated by the input data 201 at each of the nodes in the input layer 210 may be transmitted from the input layer 210 to the hidden layers 220. The output layer 230 may generate output data 203 of the neural network 200 based on one or more signals received from the hidden layers 220. For example, the output data 203 may correspond to a vector and/or matrix with elements corresponding to the number of nodes included in the output layer 230.

Data generated in each layer prior to the output layer 230 may be an output of one layer and an input parameter of nodes included in the next layer. Meanwhile, respective nodes in a layer may determine output data based on data and weights received from nodes included in the previous layer. The weight is a parameter used to calculate output data at each node and may be a value assigned to a connection relationship between nodes. The output data generated from the nodes included in the layer may be data generated by a dot-product computation of the data and weight inputted to the node.

However, as described in FIG. 1, the data inputted to each layer may be a plurality of data types. The electronic device 121 according to at least one embodiment may receive a plurality of data having different data types as input data and perform a dot-product computation on the input data. For example, the electronic device 121 according to at least one embodiment may perform a dot-product computation on an input matrix of floating point data and a weight matrix converted to an integer for lightweight.

As described in FIG. 1, the data inputted to each layer may be different bits. The electronic device 121 according to at least one embodiment may receive a plurality of data having different bits as input data and perform a dot-product computation on the input data. For example, the electronic device 121 may perform a dot-product computation on 3 bit data and 2 bit data.

In order to compensate for, e.g., the different precisions in the different data types, the electronic device 121 according to at least one embodiment may generate a clock signal based on a bit of input data and perform a dot-product computation based on the corresponding clock signal. For example, a multiplication result for input data may be derived by shifting and adding data based on a clock signal.

Thus, the electronic device 121 according to at least one embodiment may improve the performance of the computing device and may implement the lightweight of the neural network model algorithm, based on the reduction of input data while maintaining the accuracy of data.

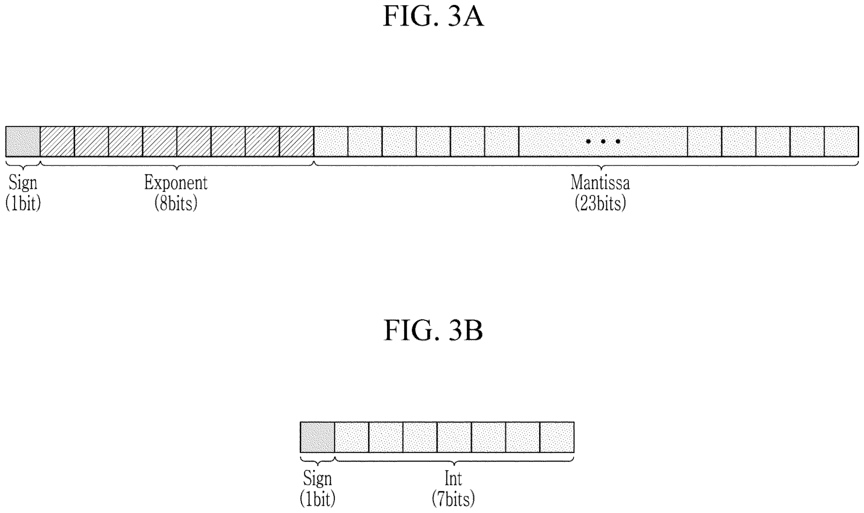

FIG. 3(A) and FIG. 3(B) are drawings for explaining an input data format. Specifically, FIG. 3(A) is a drawing for explaining a floating point data format processed by a computing device, and FIG. 3(B) is a drawing for explaining integer data.

Referring to FIG. 3(A), the floating point data may have various forms depending on precision, but the most commonly used method is the institute of electrical and electronics engineering (IEEE) 754 standard method. The IEEE 754 standard method divides real numbers into signs, exponents, and mantissa. For example, floating point numbers may be expressed as Equation 1, where $s$ is the sign, $mantissa$ is the mantissa, and $e$ is the exponent.

$$(\text{Equation } 1)$$

$$x = (-1)^s \times mantissa \times 2^e$$

At single precision, floating point data uses a total of 32 bits. Specifically, the sign is 1 bit, which represents the sign of the data, and is 0 when it is a positive number, and is 1 when it is a negative number. The exponent is 8 bits and represents the exponent, and the mantissa is 23 bits and represents the mantissa or significant digit.

For example, -314.625 can be expressed in the IEEE 754 floating point format as follows.

First, since the sign is negative, s becomes 1.

Regarding the mantissa, when the absolute value of the number, 314.625, is expressed as a binary number, it becomes $100111010.101_{(2)}.100111010.101_{(2)}$ In this case, when the decimal point is moved to the left so that only 1 remains on the left of the decimal point, it may be expressed as follows, which is called a normalized expression method.

$$100111010.101_{(2)} = 1.00111010101_{(2)} \times 2^{8}$$

Here, the mantissa becomes a right portion of the decimal point, that is, 001110101.

Regarding the exponent, in the normalized expression of -314.625, the exponent is 8, and adding the bias value of 127 to the exponent 8 becomes 135. In this case, when 135 is converted to binary, it becomes $10000111_{(2)}$, and this value becomes the exponent. $10000111_{(2)}$

Here, single precision is described as an example, in half precision or double precision, the bits and bias values of the exponent and mantissa may be different.

Meanwhile, referring to FIG. 3(B), integer data may be expressed in various types depending on the presence or absence of a sign and data size (number of bits). As an example, an integer generally used in computing operations may be expressed as eight bits of data (2's complement) including a sign, as shown in FIG. 3(B), where the most significant bit represents a sign, and the subsequent seven bits represent an integer, and its size may be represented by Equation 2:

(Equation 2)

$$\sum_{0}^{6} Int_n \times 2^n - Int_n \times 2^7 \sum_{0}^{6} Int_n \times 2^n - Int_n \times 2^7$$

When it is an unsigned number, it is a positive number and its size may be represented by Equation 3:

(Equation 3)

$$\sum_{0}^{7} Int_n \times 2^i \sum_{0}^{7} Int_n \times 2^i$$

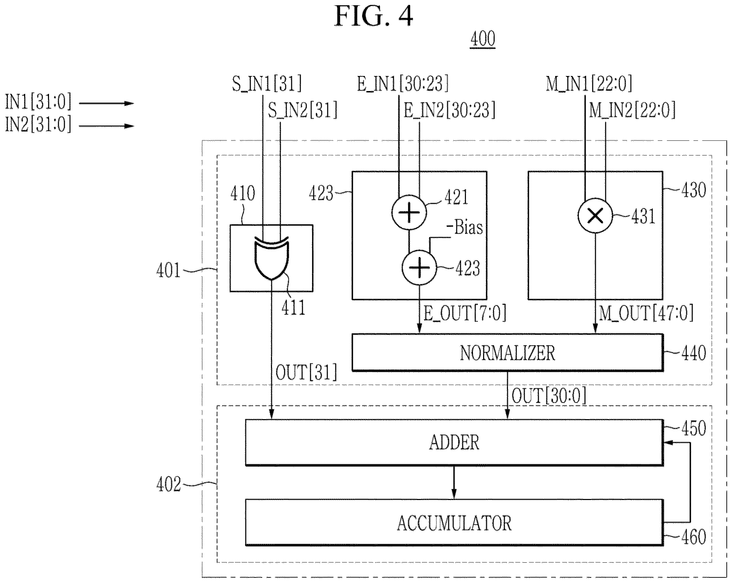

FIG. 4 illustrates a computing circuit according to a comparative example. Specifically, a computing circuit 400 according to the comparative example may perform multiplication and accumulation computations on floating point data.

Referring to FIG. 4, the computing circuit 400 according to the comparative example may receive first input data (IN1[31:0]) and second input data (IN2[31:0]), and may perform multiplication and accumulation computations on the input data. In an example, when the first input data IN1[31:0] and the second input data IN2[31:0] are 32-bit floating point data, the first input data IN1[31:0] and the second input data IN2[31 :0] may respectively include 1-bit sign data S_IN1[31] and S_IN2[31]), 8-bit exponent data E_IN1[30:23] and E_IN2[30:23], and 23-bit mantissa data M_IN1[22:0] and M_IN2[22:0].

The computing circuit 400 according to the comparative example may include a multiplication portion 401 and an accumulation portion 402. The multiplication portion 401 may include a sign computing portion 410, an exponent computing portion 420, and a mantissa computing portion 430, and the accumulation portion 402 may include an adder 450 and an accumulator 460.

Referring to the multiplication portion 401, the sign computing portion 410 may include an exclusive OR (hereinafter referred to as XOR) gate. The sign computing portion 410 may receive the first sign data S_IN1 [31] of the first input data IN1 and the second sign data S_IN2[31] of the second input data IN2. When both the first sign data S_IN1 [31] and the second sign data S_IN2[31] have a value of "0" representing a positive number or a value of "1" representing a negative number, the XOR gate of the sign computing portion 410 may output "0", which represents a positive number. On the other hand, when one of the first sign data S_IN1 [31] and the second sign data S_IN2[31] has the value of "0" representing a positive number and the other thereof has the value of "1" representing a negative number, the XOR gate of the sign computing portion 410 may output "1", which represents a negative number. The sign computing portion 410 may output data generated as a result of the XOR computation as 1-bit sign data OUT[31] of output data (OUT).

The exponent computing portion 420 may include a first exponent adder 421 and a second exponent adder 423. The first exponent adder 421 may receive the first exponent data E_IN1 [30:23] of the first input data IN1 and the second exponent data E_IN2 [30:23] of the second input data IN2. The first exponent adder 421 may perform a first addition computation on the first exponent data E_IN1[30:23] and the second exponent data E_IN2[30:23], The first exponent adder 421 may output first addition result data generated as a result of the first addition computation. The first exponent data E_IN1[30:23] and the second exponent data E_IN2[30:23] are each added with an exponent bias value, for example, "127". As the exponent bias value is doubled by the first addition computation in the first exponent adder 421, it is necessary to subtract the exponent bias value from the first addition result data. Accordingly, the second exponent adder 423 may receive the first addition result data outputted from the first exponent adder 421, and may perform a second addition computation in which the exponent bias value (Bias), for example, "127", is subtracted from the first addition result data. The second exponent adder 423 may output data generated as a result of the second addition computation as 8-bit exponent data (E_OUT[7:0]).

The mantissa computing portion 430 may include a multiplier 431. The multiplier 431 may receive the first mantissa data M_IN1 [22:0] of the first input data IN1 and the second mantissa data M _IN2[22:0] of the second input data IN2. The multiplier 431 may perform a multiplication computation on the first mantissa data M_IN1[22:0] and the second mantissa data M_IN2[22:0]. The multiplier 431 may output data generated as a result of the multiplication computation as 48-bit mantissa data M_OUT[47:0].

The normalizer 440 may normalize the exponent data E_OUT[7:0] outputted from the exponent computing portion 420 and the mantissa data M_OUT[47:0] outputted from the mantissa computing portion 430. Normalization may refer to shifting the calculated data so that the most significant bit becomes 1. The normalized data OUT [30:0] may be outputted to the accumulation portion 402 as a multiplier result value (OUT) together with the sign data OUT[31] outputted from the sign processing circuit 410.

Referring to the accumulation portion 402, the adder 450 performs an accumulation computation by adding the data received from the multiplication portion 401 and the data received from the accumulator 460.

As described above, the computing circuit 400 according to the comparative example may perform a dot-product computation on a matrix by performing multiplication and accumulation computations on input data in the form of a matrix. However, the computing circuit 400 according to the comparative example may only receive floating point data as input data.

Meanwhile, when the multiplier 400 receives floating point data as input data, the floating point data consists of a predetermined precision, and when the size of the mantissa data, that is, the number of bits, of the floating point data is smaller than the size of the predetermined mantissa, the remaining bits are filled with "0". This is a problem in that, despite the size of the input data becoming smaller, the performance of the multiplier (e.g., the computing device) is not improved because the multiplier still performs computations on all values of the mantissa.

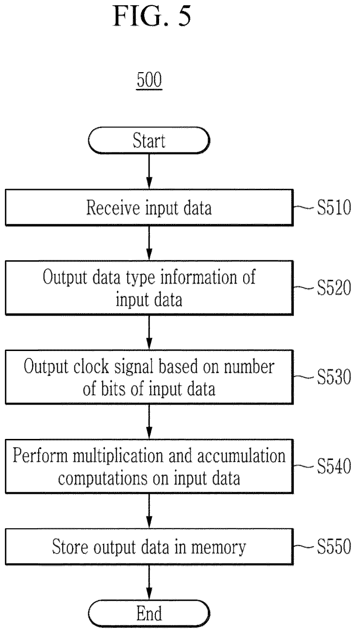

FIG. 5 is a flowchart for explaining an operation method of a neural processing unit according to at least one embodiment. FIG. 5 may be performed by the neural processing unit 120 (see FIG. 1) for neural network computation.

Referring to FIG. 5, a controller within the neural processing unit 120 receives input data from the memory device 140 (S510). The input data may include input feature values, weight values, function coefficients, and/or the like required for neural network computation. In addition, when the neural network device 120 processes a quantized neural network, input data may include quantization parameters. For example, the quantization parameter may include a scale value (or an inverse scale value), a bias value, and/or the like.

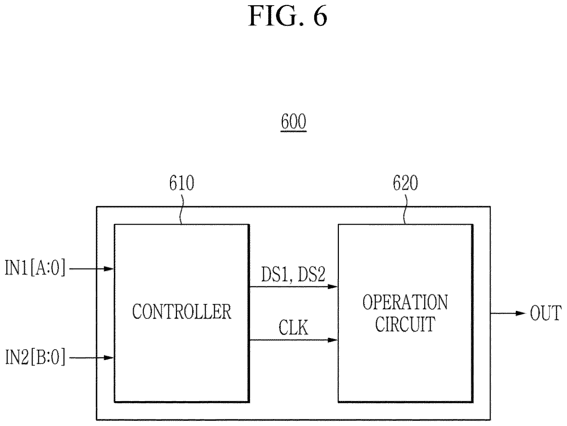

In at least one embodiment, the controller in the neural processing unit 120 outputs data type information indicating the data type of the input data (S520). In at least one embodiment, the input data may be the same and/or different data types. For example, the input data may be floating point data; and/or the input data may be integer data. The input data may be floating point data and integer data, but are not limited thereto. Data type information will be described with reference to FIG. 6 to FIG. 8.

In at least one embodiment, the controller in the neural network device 120 outputs a clock signal based on the number of bits of input data (S530). In at least one embodiment, the neural network device 120 may receive input data and count bits of the input data. In at least one embodiment, the controller in the neural network device 120 may output a clock signal equal to the number of bits of the input data. In at least one embodiment, the controller in the neural network device 120 may output a clock signal equal to the number of bits of one of the input data. In at least one embodiment, the neural network device 120 may not receive new input data until a clock cycle outputted based on bit information of the input data elapses.

In at least one embodiment, the neural network device 120 performs multiplication and accumulation computations on input data (S540). The neural network device 120 may include an adder and a shifter to perform a multiplication computation. The neural network device 120 may perform an exponent computation based on data type information. The neural network device 120 may perform a mantissa computation based on the clock signal.

In at least one embodiment, the neural network device 120 stores the final data generated in operation S540 in the memory 140 (S550).

FIG. 6 illustrates a schematic block diagram of a computing device according to at least one embodiment. A computing device 600 of FIG. 6 may perform a dot-product computation on input data. The computing device 600 in FIG. 6 may be a MAC computing device for performing multiplication and accumulation computations on input data.

In at least one embodiment, the computing device 600 may include a controller 610 and a computing circuit 620.

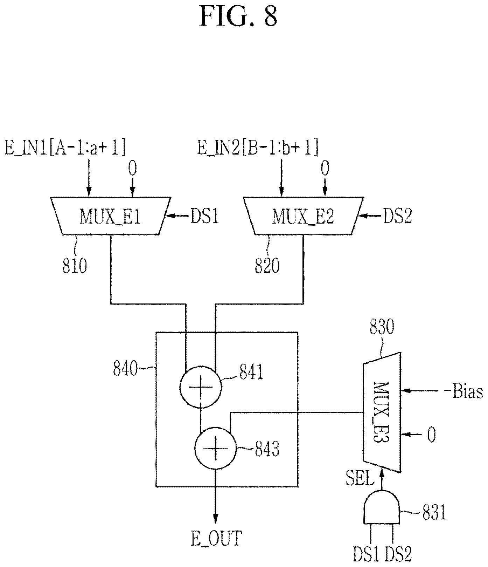

In at least one embodiment, the computing device 600 may receive input data IN1 and IN2 of the same or different types. The controller 610 may output data type signals DS1 and DS2 indicating the data types of the input data IN1 and IN2. For example, when the first input data IN1 is integer data, the first data type signal DS1 may output a "low" signal, and when the second input data IN2 is floating point data, the second data type signal DS2 may output a "high" signal, but the present disclosure is not limited thereto. In at least one embodiment, the computing circuit 620 may perform an exponent computation based on the data type signals DS1 and DS2 of the input data IN1 and IN2. The exponent computation of the computing circuit 620 will be described later with reference to FIG. 8.

In at least one embodiment, the controller 610 may output a clock signal CLK based on information on the number of data bits of the input data IN1 and IN2. For example, when the first input data IN1 is integer data and includes a sign bit, bits excluding the most significant bit may be obtained as bit number information of the first input data IN1. When the second input data IN2 is floating point data, the number of bits in the mantissa may be obtained as information on the number of bits of the second input data IN2.

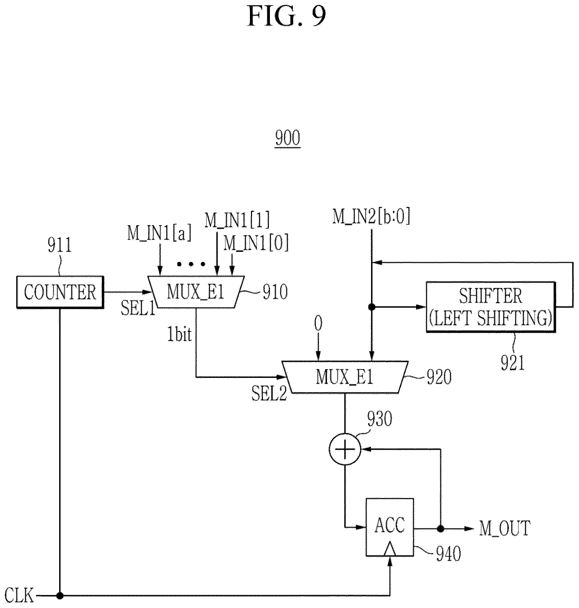

In at least one embodiment, the controller 610 may output the clock signal CLK based on information on the number of data bits of the input data IN1 and IN2. The controller 610 may output a clock signal whose cycle repeats as many bits as the input data IN1 and IN2. In at least one embodiment, the controller 610 may output a clock signal based on the number of bits of any data among a plurality of input data IN1 and IN2. In at least one embodiment, the controller 610 may compare the number of bits of the plurality of input data IN1 and IN2 to output a clock signal based on the number of bits of the input data having a small number of bits. In at least one embodiment, the computing circuit 620 may perform a mantissa computation based on the clock signal based on the information on the number of data bits of the input data IN1 and IN2. The mantissa computation of the computing circuit 620 will be described later with reference to FIG. 9.

In at least one embodiment, the controller 610 may not receive new input data until all clock signals CLK are outputted.

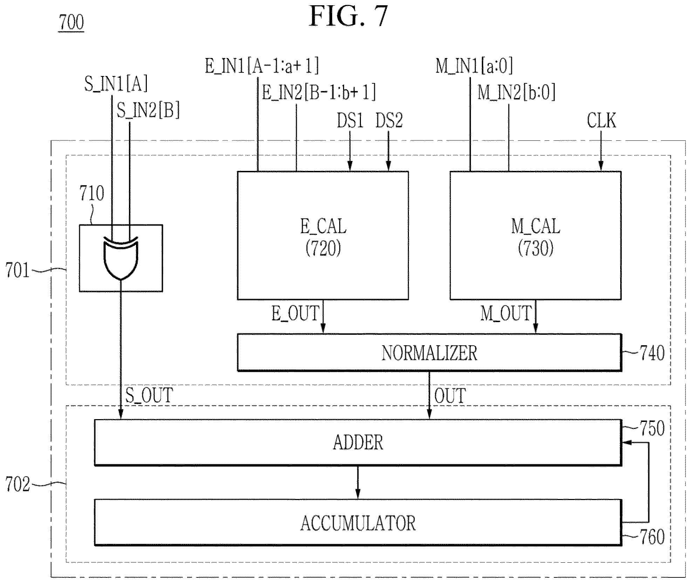

FIG. 7 illustrates a schematic block diagram of a computing circuit according to at least one embodiment.

Referring to FIG. 7, a computing circuit 700 may include a multiplication portion 701 and an accumulation portion 702. In at least one embodiment, the multiplication portion 701 may include a sign computing portion 710, an exponent computing portion 720, and a mantissa computing portion 730. In at least one embodiment, the accumulation portion 702, the adder 750, and the accumulator 760, which may be the same as and/or substantially similar to the accumulation portion 402, the adder 450, and the accumulator 460 described above.

In at least one embodiment, the sign computing portion 710 may receive first sign data S_IN1[A] of first input data IN1 and second sign data S_IN2[B] of second input data IN2. When both the first sign data S_IN1[A] and the second sign data S_IN2[B] have a value of "0" representing a positive number or a value of "1" representing a negative number, the XOR gate of the sign computing portion 710 may output "0", which represents a positive number. On the other hand, when one of the first sign data S_IN1[A] and the second sign data S_IN2[B] has the value of "0" representing a positive number and the other thereof has the value of "1" representing a negative number, the XOR gate of the sign computing portion 710 may output "1", which represents a negative number. The sign computing portion 710 may output data generated as a result of the XOR computation as 1-bit sign data (S_OUT).

The exponent processing circuit 720 may receive first exponent data E _IN1[A-1:a+1] of the first input data IN1 and second exponent data E_IN2[B-1:b+1] of the second input data IN2. In at least one embodiment, both the first input data IN1 and the second input data IN2 may be floating point data or integer data, and/or one of the first input data IN1 and the second input data IN2 may be integer data and the other thereof may be floating point data. Meanwhile, when the input data is all integer data, exponent data for the corresponding input data does not exist. The exponent processing circuit 720 may further receive data type signals DS1 and DS2 from the controller (610 in FIG. 6). The components and specific operation method of the exponent processing circuit 720 will be described with reference to FIG. 8.

FIG. 8 illustrates an exponent computing portion according to at least one embodiment.

An exponent computing portion 800 according to at least one embodiment may further include an exponent processing circuit 840 including a first exponent adder 841 and a second exponent adder 843, and multiplexers MUX_E1, MUX_E2, and MUX_E3 connected to input nodes of respective adders.

In at least one embodiment, the first multiplexer (MUX_E1) 810 includes a first input node that receives first exponent data E_IN1[A-1:a+1] of the first input data IN1 and a second input node that receives "0". The first multiplexer (MUX_E1) 810 may receive the first data type signal DS1 as a selection signal. The first multiplexer (MUX_E1) 810 may include a selection node that receives the first data type signal DS1. For example, when the first input data IN1 is integer data, the first exponent data does not exist. Accordingly, the first multiplexer 810 may output "0" based on the first data type signal DS1.

In at least one embodiment, the second multiplexer (MUX_E2) 820 includes a first input node that receives second exponent data E_IN2[B-1:b+1] of the second input data IN2 and a second input node that receives "0". The second multiplexer (MUX_E2) 820 may receive the second data type signal DS2 as a selection signal. The second multiplexer (MUX_E2) 820 may include a selection node that receives the second data type signal DS2. For example, when the second input data IN2 is floating point data, the second multiplexer 820 may output the second exponent data (E_IN2[B-1:b+1]) based on the second data type signal DS2.

According to at least one example, the first input data IN1 and the second input data IN2 may be floating point data. When the first input data IN1 and the second input data IN2 are floating point data, the first multiplexer 810 may output the first index data E_IN1[A-1:a+1] based on the first data type signal DS1, and the second multiplexer 820 may output the second exponent data E_IN2[B-1:b+1] based on the second data type signal DS2. The first exponent adder 841 may receive the first exponent data E_IN1[A-1:a+1] and the second exponent data E_IN2[B-1:b+1] and perform a first addition computation. The first exponent data E_IN1[A-1:a+1] and the second exponent data E_IN2[B-1:b+1] are each added with an exponent bias value, for example, "127". As the exponent bias value is doubled by the first addition computation of the first exponent adder 841, it is necessary to subtract the exponent bias value from the first addition result data.

Meanwhile, the third multiplexer (MUX_E3) 830 may include a first input node that receives a negative exponent bias value (-Bias) and a second input node that receives "0". The third multiplexer 830 may receive a signal generated by AND-computing the first data type signal DS1 and the second data type signal DS2 by the AND operator 831 as a selection signal SEL. The third multiplexer 830 may include a selection node that receives a signal generated by AND-computing the first data type signal DS1 and the second data type signal DS2 by the AND operator 831. For example, the third multiplexer 830 may output a negative exponent bias value when both the first input data and the second input data are floating point data, that is, when the selection signal SEL is "1". The third multiplexer 830 may output "0" when one of the first input data and the second input data is integer data, that is, when the selection signal SEL is "0". In an example, since both the first input data IN1 and the second input data IN2 are floating point data, the third multiplexer 830 may output a negative exponent bias value, for example, "-127", based on the selection signal SEL. Accordingly, the second exponent adder 843 may receive the first addition result data outputted from the first exponent adder 841, and may perform a second addition computation in which the exponent bias value (Bias), for example, "127", is subtracted from the first addition result data. The second exponent adder 843 may output data generated as a result of the second addition computation as exponent data E_OUT of multiplication data OUT.

According to another example, the first input data IN1 may be floating point data, and the second input data IN2 may be integer data. When the first input data IN1 is floating point data and the second input data IN2 is integer data, the first multiplexer 810 of the exponent computing portion 800 may output the first index data E_IN1[A-1:a+1] based on the first data type signal DS1, and the second multiplexer 820 may output "0" based on the second data type signal DS2. The first exponent adder 841 may receive the first exponent data E_IN1[A-1:a+1] and "0" and perform a first addition computation. The first exponent data E_IN1[A-1:a+1] is in a state in which an exponent bias value, for example, "127", is added, and there is no need to subtract the exponent bias value from the first addition result data. Accordingly, the third multiplexer 830 may output "0" based on the selection signal SEL. Accordingly, the second exponent adder 843 may receive the first addition result data outputted from the first exponent adder 841, and may perform a second addition computation of subtracting "0" from the first addition result data. The second exponent adder 843 may output data generated as a result of the second addition computation as exponent data E_OUT of multiplication data OUT.

According to another example, the first input data IN1 and the second input data IN2 may be integer data. When the first input data IN1 and the second input data IN2 are integer data, the first multiplexer 810 of the exponent computing portion 800 may output "0" based on the first data type signal DS1, and the second multiplexer 820 may output "0" based on the second data type signal DS2. The first exponent adder 841 may receive the output data of the first multiplexer 810 and the output data of the second multiplexer 820, and may perform the first addition computation. The third multiplexer 830 may output "0" based on the selection signal SEL. Accordingly, the second exponent adder 843 may receive the first addition result data outputted from the first exponent adder 841, and may perform the second addition computation of subtracting "0" from the first addition result data. The second exponent adder 843 may output data generated as a result of the second addition computation, that is, "0", as the exponent data E_OUT of the multiplication data OUT.

Referring back to FIG. 7, the mantissa computing portion 730 may receive the first mantissa data M_IN1[a:0] of the first input data IN1 and the second mantissa data M_IN2[b:0] of the second input data IN2. When the input data is floating point data, the mantissa data refers to the mantissa, and when the input data is integer data, the mantissa data may correspond to the integer. The mantissa computing portion 730 may further receive the clock signal CLK from the controller (610 in FIG. 6). The components and specific operation method of the mantissa computing portion 730 will be described with reference to FIG. 9.

FIG. 9 illustrates a mantissa computing portion according to at least one embodiment. Here, for better understanding and ease of description, it is referred to as the mantissa computing portion, and when the input data is integer data, data inputted to the mantissa computing portion may be an integer part.

A mantissa computing portion 900 according to at least one embodiment may include a first multiplexer 910, a second multiplexer 920, a counter 911, a shifter 921, an adder 930, and an accumulator 940. The mantissa computing portion 900 according to at least one embodiment may perform a multiplication computation on input data. The mantissa computing portion 900 according to at least one embodiment may use the shifter 921 and the adder 930 to perform a multiplication computation.

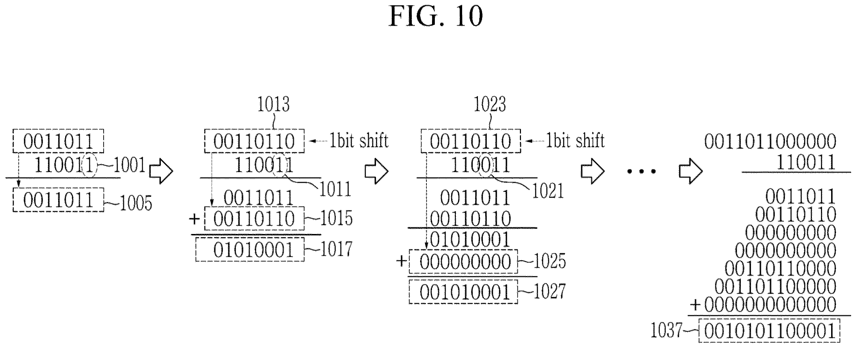

The multiplication computation of the mantissa computing portion 900 according to at least one embodiment may be performed through addition and shift computations. The computing method of the mantissa computing portion 900 will be described with reference to FIG. 10.

FIG. 10 is a drawing for explaining a computing method of the mantissa computing portion according to FIG. 9.

Referring to FIG. 10, in $0011011_{(2)} \times 110011_{(2)}$, $0011011_{(2)}$ may be referred to as a multiplicand, and $110011_{(2)}$ may be referred to as a multiplier. First, when the least significant bit value of the multiplier is "1" 1001, the multiplicand may be outputted as is the multiplicand value ($0011011_{(2)}$) (1005), and the multiplicand may be shifted to the left by 1 bit ($00110110_{(2)}$) (1013).

Next, since the next bit value of the multiplier is "1" (1011), the multiplicand may be output as is ($00110110_{(2)}$) (1015), and an addition computation may be performed with the previous output value ($0011011_{(2)}$). As a result of the addition, $01010001_{(2)}$ (1017) may be outputted, and the multiplicand may be shifted to the left by 1 bit ($001101100_{(2)}$) (1023).

Next, since the next bit value of the multiplier is "0" (1021), the output value may become "0" (1025), and an addition computation may be performed with the previous output value ($01010001_{(2)}$) (1017). $01010001_{(2)}$ As a result of the addition, $001010001_{(2)}$ (1027) may be outputted, and the multiplicand may be shifted to the left by 1 bit. $001010001_{(2)}$

When the computation is performed in the above-described manner, the final output value is $0010101100001_{(2)}$ (1037), which is the same as the result of performing the $0011011_{(2)} \times 110011_{(2)}$ computation with a multiplier. That is, multiplication of binary numbers may be performed with shifters and adders.

Referring back to FIG. 9, the computation of the mantissa computing portion 900 according to at least one embodiment may be performed according to the method of FIG. 10. In at least one embodiment, the first mantissa data M_IN1[a:0] of the first input data IN1 may be a multiplier, and the second mantissa data M_IN2[b:0] of the second input data IN2 may be a multiplicand.

In at least one embodiment, the first multiplexer 910 may include a plurality of input nodes that receive the first mantissa data M_IN1[a:0] as input data. The first multiplexer 910 may receive respective bit values (M_IN1[a], ..., M_IN1[1], M_IN1[0]) of the first mantissa data M_IN1[a:0] as input data. The first multiplexer 910 may receive an output signal of the counter 911 as a selection signal SEL1. The first multiplexer 910 may include a selection node that receives the output signal of the counter 911. The counter 911 may count the number of times the clock signal CLK outputted from the controller 610 is activated. That is, the counter 911 may count cycles of the clock signal CLK. The first multiplexer 910 may sequentially output the input data (M_IN1[a], ..., M_IN1[1], M_IN1[0]) from the least significant bit to 1 bit based on the selection signal SEL1 outputted from the counter 911. The number of cycles of the clock signal CLK may be the same as the number of bits of the first mantissa data M_IN1[a:0]. The value outputted from the first multiplexer 910 may be inputted as a selection signal SEL2 of the second multiplexer 920.

In at least one embodiment, the second multiplexer 920 may include a first input node receiving second mantissa data M_IN2[b:0] and a second input node receiving "0". The second multiplexer 920 may receive an output value of the first multiplexer 910 as the selection signal SEL2, that is, respective bit values (M_IN1[a], ..., M_IN1[1], M_IN1[0]) of the first mantissa data M_IN1[a:0]. The second multiplexer 920 may include a selection node that receives an output value of the first multiplexer 910, that is, respective bit values (M_IN1[a], ..., M_IN1[1], M_IN1[0]) of the first mantissa data M_IN1[a:0]. In at least one embodiment, the second multiplexer 920 may output "0" among the input data of the second multiplexer 920 when the selection signal SEL2 is "0". In at least one embodiment, when the selection signal SEL2 is "1", the second multiplexer 920 may output the second mantissa data M_IN2[b:0] of the second input data IN2 among the input data of the second multiplexer 920.

In at least one embodiment, the adder 930 may add the output data of the second multiplexer 920 and the output data from the accumulator 940 and transmit the added data to the accumulator 940.

In at least one embodiment, the shifter 921 may shift the second mantissa data M_IN2[b:0] to the left by 1 bit. In at least one embodiment, the shifter 921 may transmit the shifted data to the second input node of the second multiplexer 920.

In at least one embodiment, the number of cycles of the clock signal CLK is the same as the number of bits of the first mantissa data M_IN1[a:0], so the above-described operation may be repeated by the number of bits of the first mantissa data M_IN1[a:0].

The mantissa computing portion 900 according to at least one embodiment does not include a multiplier, and may be configured to perform shift and addition computations on input data to output a multiplication value of the input data. The mantissa computing portion 900 according to at least one embodiment may receive data with different numbers of bits as input data and perform shift and addition computations on the input data. The mantissa computing portion 900 according to at least one embodiment has no limit to the number of bits of input data and performs shift and addition computations as many as the number of bits of input data, thereby improving the performance of the computing device as the number of bits decreases.

Referring to FIG. 7, in at least one example, when at least one of the first input data IN1 and the second input data IN2 is floating point data, the normalizer 740 may normalize the exponent data E_OUT outputted from the exponent computing portion 720 and the mantissa data M_OUT outputted from the mantissa computing portion 730. The output data OUT outputted from the normalizer may be outputted to the accumulation portion 702 together with the sign data S_OUT outputted from the sign computing portion 710. In another example, when the first input data IN1 and the second input data IN2 are integer data, that is, when the exponent data E_OUT outputted from the exponent computing portion 720 is "0", the normalizer 740 may output the mantissa data M_OUT outputted from the mantissa computing portion 730 as the output data OUT. The output data OUT outputted from the normalizer 740 may be outputted to the accumulation portion 702 together with the sign data S_OUT outputted from the sign computing portion 710.

In the accumulation portion 702 of FIG. 7, the adder 750 may perform an accumulation computation by adding the data received from the multiplier 701 and the data received from the accumulator 760.

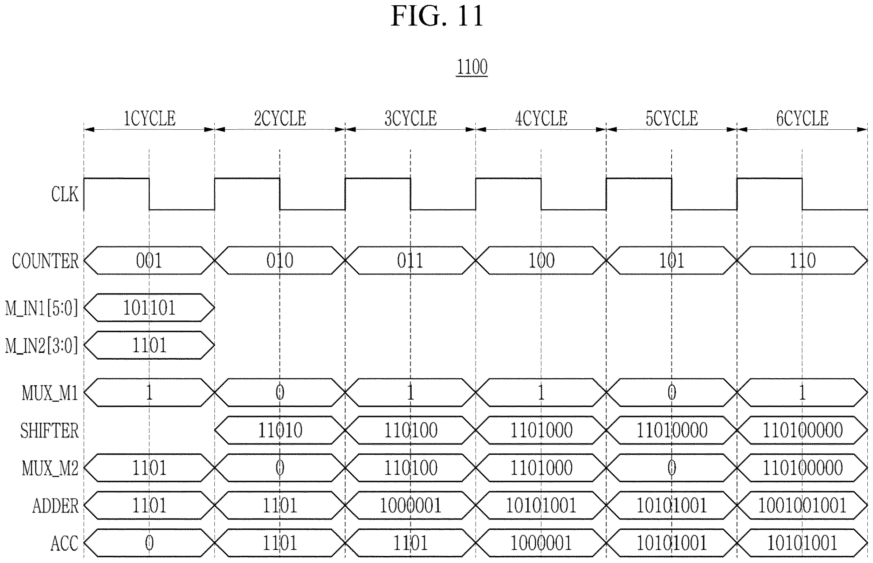

FIG. 11 illustrates a timing diagram of computation performed in a mantissa computing portion according to at least one embodiment.

Referring to FIG. 11, the first mantissa data M_IN1[5:0] may be $101101_{(2)}$ as 6 bits, and the second mantissa data M_IN2 may be $1101_{(2)}$ as 4 bits. The first mantissa data M_IN1 is a multiplier, the second mantissa data M_IN2 is a multiplicand, and the clock signal CLK is outputted for 6 cycles (6 CYCLE) that are the same as the number of bits of the first mantissa data M_IN1, which is a multiplier. The timing diagram of FIG. 11 will be described with reference to FIG. 9.

Referring to the first cycle (1 CYCLE), the counter 911 may output the first counter value ($001_{(2)}$) based on the clock signal CLK, and the first multiplexer 910 may output the least significant bit "1" of the first mantissa data ($101101_{(2)}$)), which is a multiplier, based on the output signal of the counter 911. The second multiplexer 920 may receive "0" as input data and the second mantissa data ($1101_{(2)}$), which is a multiplier. The output data ("1") of the first multiplexer 910 is inputted as the selection signal SEL2 of the second multiplexer 920, and the second multiplexer 920 may output the second mantissa data ($1101_{(2)}$) based on the selection signal SEL. Since the accumulator 940 does not output any value in the first cycle, the adder (ADDER) may output the output data ($1101_{(2)}$) of the second multiplexer 920 as is and transmit it to the accumulator (ACC).

Referring to the second cycle (2CYCLE), the counter 911 may output the second counter value ($010_{(2)}$) based on the clock signal CLK, and the first multiplexer 910 may output the second bit "0" of the first mantissa data ($101101_{(2)}$)) based on the output signal of the counter 911. The second multiplexer 920 may receive "0" as input data and $11010_{(2)}$ obtained by shifting the second mantissa data ($1101_{(2)}$) by 1 bit to the left. The output data ("0") of the first multiplexer 910 is inputted as the selection signal SEL2 of the second multiplexer 920, and the second multiplexer 920 may output "0" based on the selection signal SEL2. In the second cycle, the accumulator 940 receives the output data ($1101_{(2)}$) of the adder 930 in the first cycle, so the adder 930 may transmit data ($1101_{(2)}$) obtained by adding the output data ("0") of the second multiplexer 920 and the output data ($1101_{(2)}$) of the accumulator 940 to the accumulator 940.

Referring to the third cycle (3CYCLE), the counter 911 may output the third counter value ($011_{(2)}$) based on the clock signal CLK, and the first multiplexer 910 may output the third bit "1" of the first mantissa data ($101101_{(2)}$)) based on the output signal of the counter 911. The second multiplexer 920 may receive "0" as input data and $110100_{(2)}$ obtained by shifting the second mantissa data ($1101_{(2)}$) by 2 bit to the left. The output data ("1") of the first multiplexer 910 is inputted as the selection signal SEL2 of the second multiplexer 920, and the second multiplexer 920 may output the input data ($110100_{(2)}$)) based on the selection signal SEL2. In the second cycle, the accumulator 940 receives the output data ($1101_{(2)}$) of the adder 930 in the first cycle, so the adder 930 may transmit data ($1000001_{(2)}$) obtained by adding the output data ($110100_{(2)}$) of the second multiplexer 920 and the output data ($1101_{(2)}$) of the accumulator 940 to the accumulator 940.

When 6 cycles are performed using the above-described method, the accumulator 940 may output the received data $1001001001_{(2)}$ from the adder as output data to the normalizer (740 in FIG. 7).

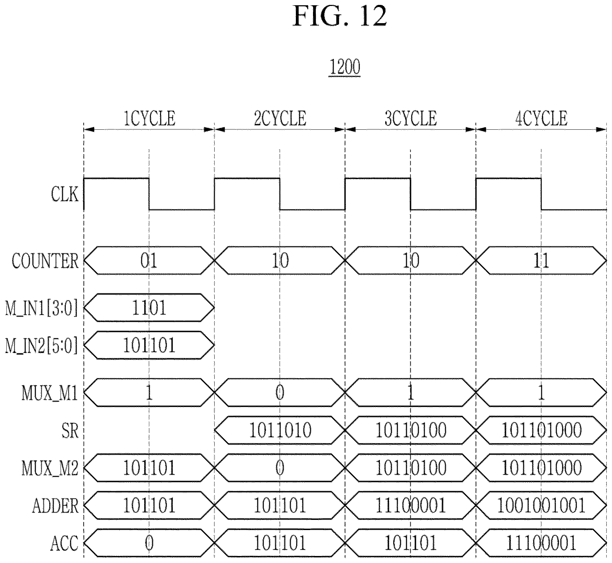

FIG. 12 illustrates a timing diagram of computation performed in a mantissa computing portion according to another embodiment.

In at least one embodiment, the controller 610 in the computing device 600 may output the clock signal CLK based on information on the number of data bits of the input data IN1 and IN2. In this case, the number of data bits of the input data IN1 and IN2 may be different. Accordingly, by comparing the number of bits of the plurality of input data IN1 and IN2, it is possible to output a clock signal based on the number of bits of the input data having a small number of bits. The controller 610 may determine data with a small number of bits as a multiplier and data with a large number of bits as a multiplicand, among a plurality of input data IN1 and IN2. Thus, the performance of the multiplier (e.g., the computing device) is improved because the multiplier is configured to skip computations on those out of cycle values of the mantissa.

FIG. 12 illustrates at least one embodiment in which the multiplier and multiplicand are changed in at least one embodiment of FIG. 11. Specifically, $101101_{(2)}$, which is the multiplier in FIG. 11, becomes the multiplicand as the second mantissa data M_IN2 in FIG. 12, and $1101_{(2)}$, which is the multiplicand in FIG. 11, becomes the multiplier as the first mantissa data M_IN1 in FIG. 12. The clock signal CLK is outputted for four cycles equal to the number of bits of the first mantissa data M_IN1 ($1101_{(2)}$), which is a multiplier. The timing diagram of FIG. 12 will be described with reference to FIG. 9.

Referring to the first cycle (1CYCLE), the counter 911 may output the first counter value ($01_{(2)}$) based on the clock signal CLK, and the first multiplexer 910 may output the least significant bit "1" of the first mantissa data ($1101_{(2)}$)), which is a multiplier, based on the output signal of the counter 911. The second multiplexer 920 may receive "0" as input data and the second mantissa data ($101101_{(2)}$), which is a multiplier. The output data ("1") of the first multiplexer 910 is inputted as the selection signal SEL2 of the second multiplexer 920, and the second multiplexer 920 may output the second mantissa data ($101101_{(2)}$) based on the selection signal SEL2.$101101_{(2)}$Since the accumulator 940 does not output any value in the first cycle, the adder 900 according may output the output data ($101101_{(2)}$) of the second multiplexer 920 as is and transmit it to the accumulator 940.

Referring to the second cycle (2CYCLE), the counter 911 may output the second counter value ($10_{(2)}$) based on the clock signal CLK, and the first multiplexer 910 may output the second bit "0" of the first mantissa data ($1101_{(2)}$)) based on the output signal of the counter 911. The second multiplexer 920 may receive "0" as input data and input data ($1011010_{(2)}$) obtained by shifting the second mantissa data ($101101_{(2)}$) by 1 bit to the left. The output data ("0") of the first multiplexer 910 is inputted as the selection signal SEL2 of the second multiplexer 920, and the second multiplexer 920 may output "0" based on the selection signal SEL2. In the second cycle, the accumulator 940 outputs the output data ($101101_{(2)}$) of the adder 930 in the first cycle, so the adder 930 may transmit data ($101101_{(2)}$) obtained by adding the output data ("0") of the second multiplexer 920 and the output data ($101101_{(2)}$) of the accumulator 940 to the accumulator 940.

When 4 cycles are performed using the above-described method, the accumulator 940 may output the received data $1001001001_{(2)}$ from the adder as output data to the normalizer (740 in FIG. 7).

In this way, when the number of bits of the mantissa data inputted to the mantissa computing portion is different, data with a smaller number of bits among the input data may be determined as a multiplier (e.g., the input data of the first multiplexer 910). This has the advantage of reducing the latency required for computations on input data because the cycle of the clock signal CLK is reduced so that the number of repetitions of computations performed in the mantissa computing portion decreases. Thus, the performance of the multiplier (e.g., the computing device) may be improved.

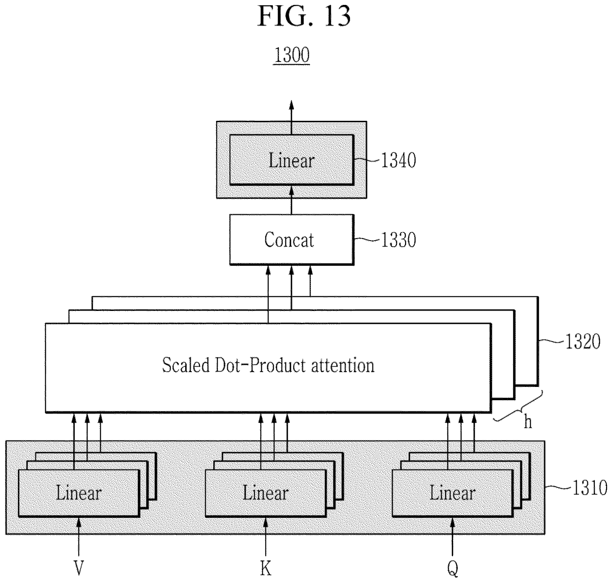

Figure 13 is an example drawing for explaining multi-head attention according to at least one embodiment.

A multi-head attention 1300 is a mechanism used in a transformer model and an automatic speech recognition (ASR) model among neural network models, and it has a scaled dot-product attention 1320 structure in the form of an overlap (h). In at least one embodiment, the multi-head attention 1300 may perform self-attention regarding embedding of input data. Embedding may refer to a result or a series of processes of converting natural language used by humans into a vector form that machines may understand.

When processing sequence data such as natural language, long-term dependency may be a problem. Self-attention is intended to solve the long-term dependency, and when using the self-attention, it is possible to measure the relationships between words in a sentence. Specifically, a relationship value with other words may be calculated based on each word, and this value is referred to as an attention score. Attention scores between words with large relationships may be high. A table of attention scores is called an attention map. The multi-head attention 1300 may check attention for various feature values by making a plurality of attention maps.

In the multi-head attention 1300, an input of a scaled dot-product attention layer 1320 includes query (Q), key (K), and value (V). For example, when looking up the meaning of a specific word through an English dictionary, the specific word may correspond to a query, a word registered in the dictionary may correspond to a key, and the meaning of the key may correspond to a value.

The multi-head attention 1300 may reduce the dimensions of the value (V), the key (K), and/or the query (Q) through the first linear computing layer 1310, and self-attention may be performed through h scaled dot-product attention layers 1320, and linear computations may be performed through concatenation 1330 and the second linear computing layer 1340 regarding the attention result.

In at least one embodiment, the linear computation performed in the first linear computing layer 1310 and the second linear computing layer 1340 may refer to a matrix dot-product computation. For example, in order to reduce the dimensions of the value (V), the key (K), and the query (Q) derived from the embedding information of the input data, the first linear computation 1310 may perform a dot-product computation that multiplies the embedding vector of the input data by a specific weight, and the second linear computing blocks 1340 may perform a dot-product computation that multiplies the concatenated output matrix by a specific weight.

The first linear computing layer 1310 and/or the second linear computing layer 1340 may use the computing device according to the at least one embodiment described above. For example, the first linear computing layer 1310 and the second linear computing layer 1340 may receive an input matrix and a weight matrix as input data. In at least one embodiment, the elements of the input matrix and the weight matrix may be real numbers, for example floating point data expressed as floating point numbers, or integer data. In at least one embodiment, the elements of the input matrix and the weight matrix may have different precisions, that is, bits. The computing device (121 in FIG. 1) according to at least one embodiment may perform a dot-product computation on the input matrix and the weight matrix.

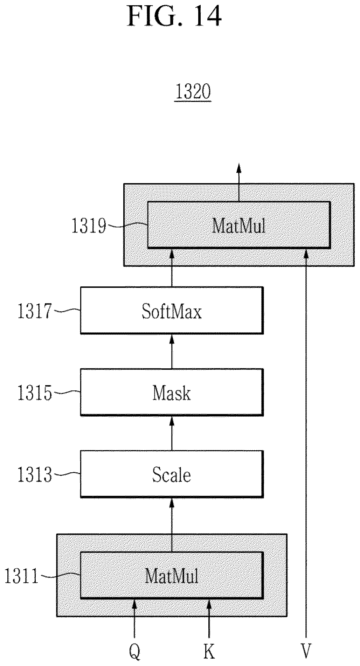

FIG. 14 is an example drawing for explaining the scaled dot-product attention of FIG. 13.

A matrix multiplication layer 1311 of the scaled dot-product attention 1320 may perform the dot-product computation of the key (K) and the query (Q) and output an attention score indicating similarity. A scaling layer 1313 may perform scaling to adjust the size of the attention score outputted from the first matrix multiplication layer 1311. A mask layer 1325 may prevent attention to incorrect connections through masking. A softmax computing layer 1327 may calculate the weight based on the attention score, and the second matrix multiplication layer 1327 may perform a dot-product computation on the weight and the value (V), which are the outputs of the softmax computing layer 1325.

The first matrix multiplication layer 1311 and the second matrix multiplication layer 1327 may use the computing device according to at least one embodiment. For example, the first matrix multiplication layer 1311 may receive a key (K) vector and a query (Q) vector as input data, and the second matrix multiplication layer 1327 may receive a value (V) vector and a weight matrix as input data. In at least one embodiment, the elements of the input data vectors of the first matrix multiplication layer 1311 and the second matrix multiplication layer 1327 may be real numbers, for example, floating point data expressed as floating point numbers, or integer data. In at least one embodiment, the elements of the input data vectors of the first matrix multiplication layer 1311 and the second matrix multiplication layer 1327 may have different precisions, that is, bits. The computing device (121 in FIG. 1) according to at least one embodiment may perform a dot-product computation on the input vector and the weight matrix.

While at least one embodiment of the present disclosure has been described in connection with what is presently considered to be practical embodiments, it is to be understood that the disclosure is not limited to the disclosed embodiments, but, on the contrary, is intended to cover various modifications and equivalent arrangements included within the scope of the appended claims.

Embodiments of the invention are set out in the following numbered clauses.

1. A computing device comprising:
processing circuitry configured to

receive first input data of a first data type and second input data of a second data type different from the first data type,
output a first signal representing the first data type, a second signal representing the second data type, and a clock signal based on a number of bits included in the first input data and the second input data, and
perform a multiplication computation based on the first signal, the second signal, and the clock signal and generate output data such that a result of the multiplication computation is based on the first input data and the second input data.

2. The computing device of clause 1, wherein

the first input data includes at least one of sign data or integer data, and
the second input data includes at least one of sign data, exponent data, or mantissa data.

3. The computing device of clause 2, wherein the processing circuitry includes

a first circuit configured to output sign data of the output data,
a second circuit configured to output exponent data of the output data based on the first signal and the second signal, and
a third circuit configured to output mantissa data of the output data based on the clock signal.

4. The computing device of clause 3, wherein the first circuit includes an exclusive OR (XOR) gate configured to

receive the sign data of the first input data and the sign data of the second input data, and
output the sign data of the output data.

5. The computing device of clause 3 or clause 4, wherein the second circuit is configured to output the exponent data of the second input data.

6. The computing device of clause 5, wherein the second circuit includes

a first multiplexer configured to output a first value based on the first signal,
a second multiplexer configured to output the exponent data of the second input data based on the second signal,
a first adder configured to add output data of the first multiplexer and output data of the second multiplexer,
a third multiplexer configured to receive a negative (-) exponential bias value and the first value and output the first value based on a third signal generated by AND-computing the first signal and the second signal, and
a second adder configured to add output data of the first adder and output data of the third multiplexer.

7. The computing device of any of clauses 3 to 6, wherein the third circuit is configured to receive first data corresponding to integer data of the first input data and second data corresponding to mantissa data of the second input data and perform the multiplication computation on the first data and the second data.

8. The computing device of clause 7, wherein the third circuit includes

a counter configured to generate an output signal based on the clock signal,
a shifter configured to shift the second data by one (1) bit,
a first multiplexer configured to sequentially output the first data from a least significant bit by 1 bit based on the output signal of the counter,
a second multiplexer configured to, based on the output data of the first multiplexer, output one of a first value, the second data, or the output data of the shifter, and
an adder configured to add output data of the second multiplexer based on the clock signal.

9. The computing device of clause 7 or clause 8, wherein the number of bits of the first data and the number of bits of the second data are different.

10. The computing device of clause 9, wherein the number of bits of the first data is smaller than the number of bits of the second data.

11. The computing device of any preceding clause, wherein the processing circuitry is configured to not receive new input data until the clock signal ends.

12. A computing device configured to perform a multiplication computation on first data of a number of first bits and second data of a number of second bits that is different from the number of first bits, comprising:

a first multiplexer including a first selection node and a plurality of input nodes, the first selection node configured to receive an output signal of a counter, the counter configured to count the number of cycles of a clock signal based on the number of first bits, and the plurality of input nodes configured to receive respective bit values of the first data,
a second multiplexer including a second selection node, a first input node, and a second input node, the second selection node configured to receive output data of the first multiplexer, the first input node configured to receive a first value, and the second input node configured to receive one of the second data or data obtained by shifting the second data by one (1) bit from a shifter, and
a first adder configured to add output data of the second multiplexer based on the clock signal.

13. The computing device of clause 12, wherein

the first multiplexer is configured to sequentially output 1 bit by bit from a least significant bit value, of the bit value of the first data, based on the output signal of the counter, and
the second multiplexer is configured to output the first value when the output data of the first multiplexer is "0" and output one of the second data or the output data of the shifter when the output data of the first multiplexer is "1".

14. The computing device of clause 12 or clause 13, wherein the number of the first bits is smaller than the number of the second bits.

15. The computing device of any of clauses 12 to 14, further comprising:
a controller configured to receive first input data including the first data and second input data including the second data and to output a first signal representing a data type of the first input data and a second signal representing a data type of the second input data.

16. The computing device of clause 15, wherein the first input data and the second input data are each at least one of a

first data type data including sign data and integer data, or
second data type data including sign data, exponent data, and mantissa data, and
the first data corresponds to integer data or mantissa data of the first input data, and the second data corresponds to integer data or mantissa data of the second input data.

17. The computing device of clause 16, further comprising:

a third multiplexer configured to output one of an exponent data of the first input data or a first value based on the first signal,

a fourth multiplexer configured to output one of an exponent data of the second input data or a first value based on the second signal,

a fifth multiplexer configured to output one of a negative (-) exponential bias value or a first value based on a third signal, the third signal obtained by AND-computing the first signal and the second signal,

a second adder configured to add the output data of the third multiplexer and the output data of the fourth multiplexer, and

a third adder configured to add the output data of the second adder and the output data of the fifth multiplexer.

18.The computing device of clause 17, further comprising
a normalization circuit configured to normalize the output data of the first adder and the output data of the third adder when at least one of the first input data and the second input data is the second data type data.

19. The computing device of any of clauses 16 to 18, further comprising
an exclusive OR (XOR) gate configured to receive the sign data of the first input data and the sign data of the second input data.

20.A neural processing system comprising:

a non-transitory memory; and
processing circuitry configured to receive an input matrix and a weight matrix corresponding to input data from the memory, perform a matrix dot-product computation on the input matrix and the weight matrix, and output a result of performing the matrix dot-product computation as an output matrix,
wherein the input matrix includes elements of a first data type and the weight matrix includes elements of a second data type different from the first data type, and
the processing circuitry includes a computing device configured to output one of exponent data of elements of the input matrix or exponent data of elements of the weight matrix as exponent data of elements of the output matrix based on the first data type and the second data type.

**Claims**

1. A computing device comprising:
processing circuitry configured to

receive first input data of a first data type and second input data of a second data type different from the first data type,
output a first signal representing the first data type, a second signal representing the second data type, and a clock signal based on a number of bits included in the first input data and the second input data, and
perform a multiplication computation based on the first signal, the second signal, and the clock signal and generate output data such that a result of the multiplication computation is based on the first input data and the second input data.

2. The computing device of claim 1, wherein

the first input data includes at least one of sign data or integer data, and
the second input data includes at least one of sign data, exponent data, or mantissa data.

3. The computing device of claim 2, wherein the processing circuitry includes

a first circuit configured to output sign data of the output data,
a second circuit configured to output exponent data of the output data based on the first signal and the second signal, and
a third circuit configured to output mantissa data of the output data based on the clock signal.

4. The computing device of claim 3, wherein the second circuit is configured to output the exponent data of the second input data.

5. The computing device of claim 4, wherein the second circuit includes

a first multiplexer configured to output a first value based on the first signal,
a second multiplexer configured to output the exponent data of the second input data based on the second signal,
a first adder configured to add output data of the first multiplexer and output data of the second multiplexer,
a third multiplexer configured to receive a negative (-) exponential bias value and the first value and output the first value based on a third signal generated by AND-computing the first signal and the second signal, and
a second adder configured to add output data of the first adder and output data of the third multiplexer.

6. The computing device of any of claims 3 to 5, wherein the third circuit is configured to receive first data corresponding to integer data of the first input data and second data corresponding to mantissa data of the second input data and perform the multiplication computation on the first data and the second data.

7. The computing device of claim 6, wherein the third circuit includes

a counter configured to generate an output signal based on the clock signal,
a shifter configured to shift the second data by one (1) bit,
a first multiplexer configured to sequentially output the first data from a least significant bit by 1 bit based on the output signal of the counter,
a second multiplexer configured to, based on the output data of the first multiplexer, output one of a first value, the second data, or the output data of the shifter, and
an adder configured to add output data of the second multiplexer based on the clock signal.

8. A computing device configured to perform a multiplication computation on first data of a number of first bits and second data of a number of second bits that is different from the number of first bits, comprising:

a first multiplexer including a first selection node and a plurality of input nodes, the first selection node configured to receive an output signal of a counter, the counter configured to count the number of cycles of a clock signal based on the number of first bits, and the plurality of input nodes configured to receive respective bit values of the first data,
a second multiplexer including a second selection node, a first input node, and a second input node, the second selection node configured to receive output data of the first multiplexer, the first input node configured to receive a first value, and the second input node configured to receive one of the second data or data obtained by shifting the second data by one (1) bit from a shifter, and
a first adder configured to add output data of the second multiplexer based on the clock signal.

9. The computing device of claim 8, wherein

the first multiplexer is configured to sequentially output 1 bit by bit from a least significant bit value, of the bit value of the first data, based on the output signal of the counter, and
the second multiplexer is configured to output the first value when the output data of the first multiplexer is "0" and output one of the second data or the output data of the shifter when the output data of the first multiplexer is "1".

10. The computing device of claim 8 or claim 9, wherein the number of the first bits is smaller than the number of the second bits.

11. The computing device of any of claims 8 to 10, further comprising:
a controller configured to receive first input data including the first data and second input data including the second data and to output a first signal representing a data type of the first input data and a second signal representing a data type of the second input data.

12. The computing device of claim 11, wherein the first input data and the second input data are each at least one of a

first data type data including sign data and integer data, or
second data type data including sign data, exponent data, and mantissa data, and
the first data corresponds to integer data or mantissa data of the first input data, and the second data corresponds to integer data or mantissa data of the second input data.

13. The computing device of claim 12, further comprising:

a third multiplexer configured to output one of an exponent data of the first input data or a first value based on the first signal,

a fourth multiplexer configured to output one of an exponent data of the second input data or a first value based on the second signal,

a fifth multiplexer configured to output one of a negative (-) exponential bias value or a first value based on a third signal, the third signal obtained by AND-computing the first signal and the second signal,

a second adder configured to add the output data of the third multiplexer and the output data of the fourth multiplexer, and

a third adder configured to add the output data of the second adder and the output data of the fifth multiplexer.

14. The computing device of claim 13, further comprising
a normalization circuit configured to normalize the output data of the first adder and the output data of the third adder when at least one of the first input data or the second input data is the second data type data.

15. A neural processing system comprising:

a non-transitory memory; and
processing circuitry configured to receive an input matrix and a weight matrix corresponding to input data from the memory, perform a matrix dot-product computation on the input matrix and the weight matrix, and output a result of performing the matrix dot-product computation as an output matrix,
wherein the input matrix includes elements of a first data type and the weight matrix includes elements of a second data type different from the first data type, and
the processing circuitry includes a computing device configured to output one of exponent data of elements of the input matrix or exponent data of elements of the weight matrix as exponent data of elements of the output matrix based on the first data type and the second data type.

# FIG. 1

100

120

NEURAL PROCESSING UNIT

110

| CENTRAL PROCESSING UNIT |
|---|

| COMPUTING DEVICE |
|---|
121

| VIOLATILE MEMORY DEVICE |
|---|
130

| NONVOLATILE MEMORY DEVICE |
|---|
140

| USER INTERFACE |
|---|
150

# FIG. 2

INPUT DATA (201) ⇨

⇨ OUTPUT DATA (203)

200

220

210

230

EP 4 535 162 A1

# FIG. 3A

Sign
(1bit)

Exponent
(8bits)

Mantissa
(23bits)

# FIG. 3B

Sign
(1bit)

Int
(7bits)

EP 4 535 162 A1

# FIG. 4

400

IN1[31:0] →
IN2[31:0] →

S_IN1[31]
S_IN2[31]

E_IN1[30:23]
E_IN2[30:23]

M_IN1[22:0]
M_IN2[22:0]

401

410
411

423
421
−Bias
423

430
431

E_OUT[7:0]

M_OUT[47:0]

NORMALIZER — 440

OUT[31]

OUT[30:0]

402

ADDER — 450

ACCUMULATOR — 460

EP 4 535 162 A1

# FIG. 5

<u>500</u>

```
        ┌─────────────┐
        │    Start     │
        └──────┬──────┘
               │
               ▼
   ┌───────────────────────────┐
   │     Receive input data     │──── S510
   └──────────────┬────────────┘
                  │
                  ▼
   ┌───────────────────────────┐
   │  Output data type information of │──── S520
   │          input data            │
   └──────────────┬────────────┘
                  │
                  ▼
   ┌───────────────────────────┐
   │ Output clock signal based on number │──── S530
   │       of bits of input data       │
   └──────────────┬────────────┘
                  │
                  ▼
   ┌───────────────────────────┐
   │ Perform multiplication and accumulation │──── S540
   │     computations on input data      │
   └──────────────┬────────────┘
                  │
                  ▼
   ┌───────────────────────────┐
   │    Store output data in memory    │──── S550
   └──────────────┬────────────┘
                  │
                  ▼
        ┌─────────────┐
        │     End      │
        └─────────────┘
```

# FIG. 6

600

610 620

IN1[A:0] →

CONTROLLER

DS1, DS2 →

CLK →

OPERATION CIRCUIT

→ OUT

IN2[B:0] →

## FIG. 7

700

S_IN1[A]

S_IN2[B]

E_IN1[A-1:a+1]

E_IN2[B-1:b+1]

M_IN1[a:0]

M_IN2[b:0]

DS1  DS2

CLK

710

701

E_CAL
(720)

M_CAL
(730)

E_OUT

M_OUT

NORMALIZER — 740

S_OUT

OUT

ADDER — 750

702

ACCUMULATOR — 760

EP 4 535 162 A1

# FIG. 8

# FIG. 9

900

FIG. 10

EP 4 535 162 A1

**FIG. 11**

1100

EP 4 535 162 A1

# FIG. 12

EP 4 535 162 A1

1200

| | 1CYCLE | 2CYCLE | 3CYCLE | 4CYCLE |
|---|---|---|---|---|
| CLK | | | | |
| COUNTER | 01 | 10 | 10 | 11 |
| M_IN1[3:0] | 1101 | | | |
| M_IN2[5:0] | 101101 | | | |
| MUX_M1 | 1 | 0 | 1 | 1 |
| SR | | 1011010 | 10110100 | 101101000 |
| MUX_M2 | 101101 | 0 | 10110100 | 101101000 |
| ADDER | 101101 | 101101 | 11100001 | 1001001001 |
| ACC | 0 | 101101 | 101101 | 11100001 |

# FIG. 13

<u>1300</u>

# FIG. 14

<u>1320</u>

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/188073 A1 (BOWMAN JOSHUA WAYNE [US] ET AL) 16 June 2022 (2022-06-16) * paragraph [0016] - paragraph [0025] * * paragraph [0057] - paragraph [0061] * ----- | 1-7 | INV. G06F7/544 |
| X | US 5 751 614 A (COHEN EARL T [US]) 12 May 1998 (1998-05-12) * column 4, line 9 - line 31 * * column 7, line 11 - line 33; figure 6 * ----- | 8-14 | |
| X | US 2022/382514 A1 (PILLAI KAMLESH [IN] ET AL) 1 December 2022 (2022-12-01) * paragraph [0051] - paragraph [0081] * ----- | 15 | |
| | | | **TECHNICAL FIELDS SEARCHED (IPC)** |
| | | | G06F |

The present search report has been drawn up for all claims

| Place of search | Date of completion of the search | Examiner |
|---|---|---|
| Munich | 28 January 2025 | Tenbieg, Christoph |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 19 4801

This annex lists the patent family members relating to the patent documents cited in  the above-mentioned European search report.
The members are as contained in the European Patent Office EDP file on
The European Patent Office is in no way liable for these particulars which are merely given for the purpose of information.

28-01-2025

| Patent document cited in search report | Publication date | Patent family member(s) | | Publication date |
|---|---|---|---|---|
| US 2022188073 A1 | 16-06-2022 | CN | 116601585 A | 15-08-2023 |
| | | EP | 4260174 A1 | 18-10-2023 |
| | | US | 2022188073 A1 | 16-06-2022 |
| | | WO | 2022126116 A1 | 16-06-2022 |
| US 5751614 A | 12-05-1998 | NONE | | |
| US 2022382514 A1 | 01-12-2022 | NONE | | |

EPO FORM P0459

For more details about this annex : see Official Journal of the European Patent Office, No. 12/82